Europäisches Patentamt

**European Patent Office**

Office européen des brevets

(19)

(11) Publication number: **0 061 542**

A1

(12) **EUROPEAN PATENT APPLICATION**

(21) Application number: **81301343.0**

(22) Date of filing: **27.03.81**

(51) Int. Cl.³: **B 60 P 1/16**

(43) Date of publication of application:
**06.10.82 Bulletin 82/40**

(84) Designated Contracting States:
**AT BE CH DE FR GB IT LI LU NL SE**

(71) Applicant: **OGDEN ELECTRONICS LTD.**
**c/o The Ogden Group of Companies**
**Otley Yorkshire(GB)**

(72) Inventor: **Steel, James**
**Cairn House Farm**
**Dalton Newcastle Upon Tyne(GB)**

(74) Representative: **Gordon, Richard John Albert et al,**
**F.J. CLEVELAND & COMPANY 40-43, Chancery Lane**
**London WC2A 1JQ(GB)**

(54) **Apparatus for operating a movable component of a vehicle.**

(57) Apparatus for operating a movable component, such as a pivotable skip, of a vehicle comprises a pivotable lever (15) for operating a valve (20) for supplying working fluid through a conduit (11) to effect movement of the component. The lever (15) is restrained from being moved from an inoperative position by a detent (16) until switches (18, 20, 21 and 24) in a circuit, which also includes a solenoid (17), are closed causing energisation of the solenoid. Energisation of the solenoid (17) effects removal of the detent (16) from the path of the lever (15) permitting movement of the lever.

FIG 1

EP 0 061 542 A1

COMPLETE DOCUMENT

DESCRIPTION

This invention relates to apparatus for operating a movable component of a vehicle.

It is known to provide motor vehicle tip trucks each provided with a skip for containing a load. The skip of such a vehicle is pivotable about a transverse axis at the rear of the vehicle so that the skip can be pivoted in a rearward direction of the vehicle on the axis with a result that a load contained in the skip slides downwardly and rearwardly thereof and is deposited on ground to the rear of the vehicle.

The pivoting, or 'tipping', operation of the skip generally is affected by means of a fluid pressure system which is controlled by operation of a lever pivotable about an axis extending through one end portion thereof. The lever generally is located in a driver's cab of the vehicle.

A disadvantage of providing such a lever in the cab is that there is a tendancy for a driver to operate the lever to effect pivoting of a skip while the vehicle is in motion.

A further disadvantage is that the skip may be operated to deposit a load when the longitudinal and transverse axes of the vehicle are not in a substantially horizontal plane. In consequence, when a laiden skip is operated to deposit the load, the centre of gravity of the vehicle may shift to a position causing instability of the vehicle.

According to the present invention, there is provided apparatus for operating a movable component of a vehicle comprising operating means for controlling movement of the component, the operating means being movable in a path from an inoperative position to an operative position, a detent adapted to be moved into said path to restrain movement of the operating means in said path from said inoperative position, and actuating means for withdrawing the detent from said path, the actuating means being operable in response to operation of a control member for controlling the vehicle whereby the actuating means is controlled to withdraw the detent from said path when the control member is operated.

The operating means may comprise a lever pivotable at one end portion thereof so as to move in the said path.

The lever may be adapted to control operation of a valve when moved in the said path,

— 4 —

the valve controlling supply of fluid in a fluid control system for moving the component.

The actuating means may be controlled by an electrical circuit which may include a plurality of switches.

One of said switches may be operated in response to movement of a gear selector lever of the vehicle.

Another of said switches may be operated in response to operation of a brake pedal of the vehicle.

Another of said switches may be operated in response to operation of an additional pedal of a vehicle.

Another of said switches may be operable when longitudinal and transverse axes of the vehicle are in a substantially horizontal plane.

The switch operable in response to operation of the brake pedal comprises a pressure switch operable in accordance with pressure of fluid in a brake system, the pressure being controlled by operation of the brake pedal.

The actuating means may comprise a solenoid operated actuating member.

Following is a description, by way of example only and with reference to the accompanying drawings, of one method of carrying the invention into effect.

In the drawings :-

FIGURE 1 is a diagrammatic representation of one embodiment of apparatus according to the present invention shown in an inoperative condition, and

FIGURE 2 is a diagrammatic representation of the apparatus shown in an operative condition.

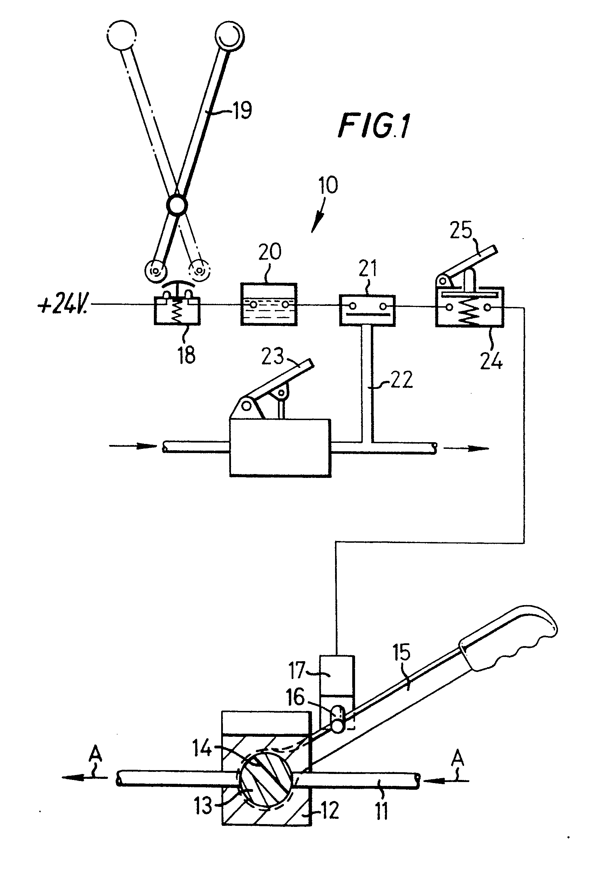

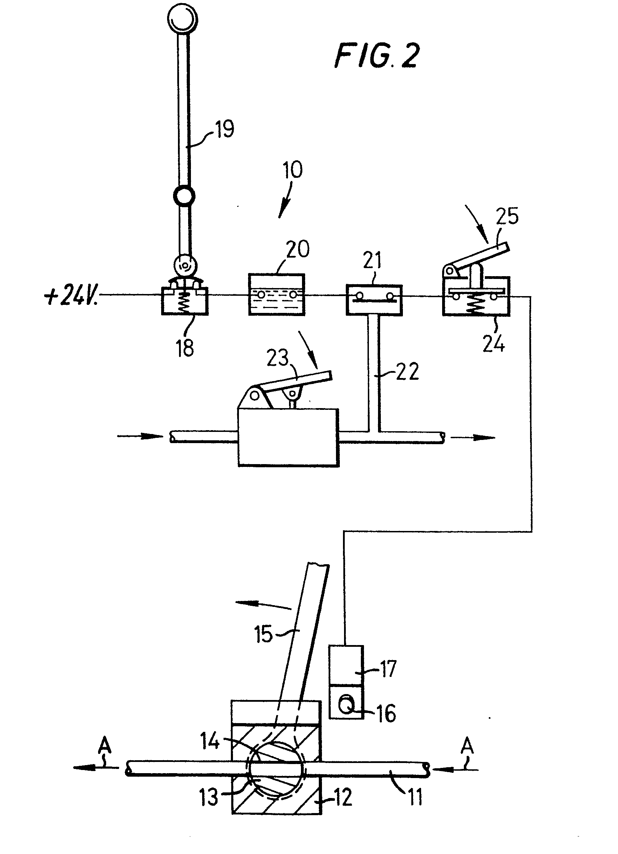

Referring now to the drawings, there is shown apparatus 10 for operating a skip (not shown) of a vehicle (not shown). The skip is operated by fluid pressure directed through a conduit 11 in the direction of the arrows A. The conduit 11 contains a valve 12 comprising a rotatable disc member 13 provided with a passageway 14 extending diametrically therethrough. The rotatable member 13 has connected thereto one end of a lever 15, the lever being pivotable about a central longitudinal axis of the rotatable member 13 to pivot the rotatable member from an inoperative position in which the central longitudinal axis of the passageway 14 is at an angle to the central longitudinal axis of the conduit 11, as shown in Figure 1, to an operative position in which the central longitudinal axes of the passageway 14 and the conduit 11 are in line, as shown in Figure 2. In order to move the rotatable member 13 from the inoperative position to the operative position and subsequently from the operative position to the inoperative position, the lever 13 is moved through an arcuate path.

The apparatus includes a detent 16 which is resiliently biased into the arcuate path to restrain movement of the lever 15 from the inoperative position. The detent 16 is moved against the resilent bias by the armature of a solenoid 17 when energised. The solenoid 17 is included in an electrical circuit which also includes a spring loaded switch 18 operable by a gear lever 19 of the vehicle, when the gear lever is in a 'neutral' position, a tilt sensor 20 operable when longitudinal and transverse axes of the vehicle are in a substantially horizontal plane, a pressure switch 21 in communication with a conduit 22 of a pneumatic braking system of the vehicle, the braking system including a pedal 23 and the conduit 22 being located downstream of the pedal 23 such that the pressure switch 21 is closed due to pressure of air in the conduit 22 when the pedal 25 is operated, and a spring loaded switch 24 operable by a pedal 25.

The lever 25 is normally in the inoperative position and is prevented from being moved through the arcuate path to the operative position to effect operation of the skip due to the detent 16 extending into the path. However, when the gear lever 19 is moved to the 'neutral' position, the brake pedal 23 is operated and the pedal 25 also is operated and assuming that the longitudinal and transverse axes of the vehicle are contained in a substantially horizontal plane, each of the switches 18, 20, 21 and 24 is closed thereby completing an electrical circuit through the solenoid 17 causing energisation of the solenoid and withdrawal of the detent 16 from the path of the lever 15. The lever 15 thereby is permitted to be pivoted on the central longitudinal axis of the rotatable member 13 from the inoperative position to the operative position and, when so moved, the rotatable member 13 is rotated to a position in which the central longitudinal axis of the passageway 14 and the conduit 11 are in line permitting fluid to be supplied through the valve 12 to effect operation of the skip.

CLAIMS

1.      Apparatus for operating a movable component of a vehicle comprising operating means for controlling movement of the component, the operating means being movable in a path from an inoperative position to an operative position, a detent adapted to be moved into said path to restrain movement of the operating means in said path from said inoperative position and actuating means for withdrawing the detent from said path, the actuating means being operable in response to operation of a control member for controlling the vehicle whereby the actuating means is controlled to withdraw the detent from said path when the control member is operated.

2.      Apparatus as claimed in claim 1 wherein the operating means comprises a lever pivotable at one end portion thereof so as to move in the said path.

3.      Apparatus as claimed in claim 2 wherein the lever is adapted to control operation of a valve when moved in the said path, the valve controlling supply of fluid in a fluid control system for moving the component.

- 9 -

4.      Apparatus as claimed in any one of the preceding claims wherein the actuating means is controlled by an electrical circuit which includes a plurality of switches.

5.      Apparatus as claimed in claim 4 wherein one of said switches is operated in response to movement of a gear selector lever of the vehicle.

6.      Apparatus as claimed in claim 5 wherein another of said switches is operated in response to operation of a brake pedal of the vehicle.

7.      Apparatus as claimed in claim 6 wherein another of said switches is operated in response to operation of an additional pedal of the vehicle.

8.      Apparatus as claimed in claim 7 wherein another of said switches is operable when longitudianl and transverse axes of the vehicle are in a substantially horizontal plane.

9.      Apparatus as claimed in any one of claims 6 to 8 wherein the switch operable in response to operation of the brake pedal comprises a pressure switch operable in accordance with pressure of fluid in a brake system, the pressure being controlled by operation of the brake pedal.

10.     Apparatus as claimed in any one of the preceding claims wherein the actuating means comprises a solenoid operated actuating member.

FIG.1

19

10

20

21

25

+24V.

18

23

22

24

17

15

16

A

14

A

13

12

11

FIG. 2

**0061542**

Application number

EP 81 30 1543

## European Patent Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 1 527 213 (GURY)<br>* Abstract 5°; figures 3,4 *<br><br>-- | 1-3 | B 60 P 1/16 |
| | US - A - 3 942 614 (THOMPSON)<br>* Whole document *<br><br>-- | 1,2 | |
| | GB - A - 2 031 127 (G.M.)<br>* Whole document *<br><br>-- | 1-3 | |
| | US - A - 4 236 757 (GREGORY)<br>* Claims 6-8 *<br><br>-- | 1 | **TECHNICAL FIELDS SEARCHED (Int. Cl.³)**<br><br>B 60 P<br>G 05 G |
| A | US - A - 3 695 710 (GRESCI)<br>* Whole document *<br><br>-- | 5,6,9 | |
| A | US - A - 3 464 755 (BROWN)<br>* Whole document *<br><br>-- | 4,8 | |
| A | US - A - 2 697 329 (EICHLER)<br>* Whole document *<br><br>-- | 4 | **CATEGORY OF CITED DOCUMENTS**<br><br>X: particularly relevant<br>A: technological background<br>O: non-written disclosure<br>P: intermediate document |
| A | DE - A - 2 652 854 (MAGIRUS-DEUTZ)<br>* Whole document *<br><br>-- | 4,8 | T: theory or principle underlying the invention<br>E: conflicting application<br>D: document cited in the application<br>L: citation for other reasons |
| A | US - H - 973 003 (KELLY)<br><br>---- | | &: member of the same patent family, corresponding document |

The present search report has been drawn up for all claims

| Place of search | Date of completion of the search | Examiner |
|---|---|---|
| The Hague | 10-12-1981 | SCHMITTER |

EPO Form 1503.1   06.78